# EUROPEAN PATENT SPECIFICATION

(11) **EP 4 207 460 B1**
(45) Date of publication and mention of the grant of the patent: **15.04.2026**
(21) Application number: 22788508.4
(22) Date of filing: 15.04.2022
(51) Int. Cl.: H01M 50/342, H01M 50/178, H01M 50/105, H01M 50/129

(54) **SECONDARY BATTERY**
SEKUNDÄRBATTERIE
PILE SECONDAIRE

(30) Priority: 15.04.2021 KR 20210049398; 18.01.2022 KR 20220007212
(43) Date of publication of application: 05.07.2023
(73) Proprietor: LG Energy Solution, Ltd., Seoul 07335 (KR)
(72) Inventor: KANG, Min-Hyeong, Daejeon 34122 (KR); KIM, Sang-Hun, Daejeon 34122 (KR); SONG, Dae-Woong, Daejeon 34122 (KR); YU, Hyung-Kyun, Daejeon 34122 (KR); LIM, Hun-Hee, Daejeon 34122 (KR); HWANG, Soo-Ji, Daejeon 34122 (KR)
(74) Representative: Plasseraud IP
(86) International application number: PCT/KR2022/005499
(87) International publication number: WO 2022/220653

(56) References cited:
- JP-A- 2018 053 180
- JP-B2- 4 772 289
- KR-A- 20030 066 895
- KR-A- 20030 066 895
- KR-A- 20080 036 257
- KR-A- 20110 131 259
- KR-A- 20110 131 259
- KR-A- 20140 035 462
- KR-A- 20160 111 614

## Description

### TECHNICAL FIELD

The present application claims priority to Korean Patent Application No. 10-2021-0049398 filed on April 15, 2021 and Korean Patent Application No. 10-2022-0007212 filed on January 18, 2022.

The present disclosure relates to a secondary battery, and more particularly, to a secondary battery having a vent member.

### BACKGROUND ART

Secondary batteries are highly applicable to various products and exhibit superior electrical properties such as high energy density, etc. Secondary batteries are commonly used not only in portable devices but also in electric vehicles (EVs) or hybrid electric vehicles (HEVs) driven by electrical power sources. The secondary battery is drawing attention as a new energy source for enhancing environment friendliness and energy efficiency in that the use of fossil fuels can be reduced greatly and no byproduct is generated during energy consumption. An example of such type of batteries can be found in document KR-20160111614A.

Secondary batteries widely used at present include lithium ion batteries, lithium polymer batteries, nickel cadmium batteries, nickel hydrogen batteries, nickel zinc batteries and the like.

The secondary battery generally has a structure in which an electrode assembly including at least one unit cell having a positive electrode/separator/negative electrode structure is accommodated in a case of a laminate sheet in which an outer layer, a metal barrier layer and a sealant layer are sequentially laminated, and a sealant resin of the sealant layer is fused to seal the electrode assembly is sealed.

**In** the conventional secondary battery, the battery may ignite due to various causes such as a short circuit inside the secondary battery, overcharge or overdischarge, temperature control, or the like. At this time, thermal propagation where the temperature inside the secondary battery rises rapidly and simultaneously the heat is transferred to neighboring cells may be generated, which may further increase the fire.

**In** order to minimize damage to the electrode caused by gas when thermal propagation occurs - *i.e.,* when the internal temperature of the secondary battery rises, directional venting characteristic is required to discharge the gas in one direction. However, the conventional secondary battery has a problem in that it is difficult to induce gas discharge in a specific direction.

Therefore, the present disclosure is directed to providing a secondary battery with improved safety by inducing gas discharge in a specific direction.

### DISCLOSURE

### Technical Problem

The present disclosure is directed to providing a secondary battery with improved safety by more easily inducing gas discharge toward a vent inducing region.

### Technical Solution

In one aspect of the present disclosure, there are provided secondary batteries according to the following embodiments.

The first embodiment provides a secondary battery as laid out in appended claim 1.

In the second embodiment according to the first embodiment, the width of the vent inducing region may be 40% to 80% of the width of the sealing portion other than the vent inducing region.

In the third embodiment according to the second embodiment, the tape may contain polyimide, polyethylene terephthalate (PET), or a mixture thereof.

In the fourth embodiment according to the third embodiment, the resin may contain a fluorine-based resin, a silicone resin, or a mixture thereof.

In the fifth embodiment according to any one of the first to fourth embodiments, the vent inducing region may be formed in the sealing portion beside the electrode leads except for a region between the electrode leads.

In the sixth embodiment according to any one of the first to fifth embodiments, the linear low-density polyethylene having a comonomer with a carbon number of 6 or more may be a linear low-density polyethylene having a comonomer with a carbon number of 6 to 8.

In the seventh embodiment according to any one of the first to sixth embodiments, the linear low-density polyethylene having a comonomer with a carbon number of 6 or more may have a lower melting point than the sealant resin.

In the eighth embodiment according to any one of the first to seventh embodiments, the vent member may melt at 100°C to 120°C to vent a gas.

In the nineth embodiment according to the eighth embodiment, the vent member may be vented at a pressure of 1.5 atm or above.

In the tenth embodiment according to any one of the first to nineth embodiments, the vent member may have a maximum sealing strength of less than 6 kgf/15 mm at 100°C or above.

In the eleventh embodiment according to any one of the first to tenth embodiments, the vent member may have an average sealing strength of less than 4.5 kgf/15 mm at 100°C or above.

In the twelfth embodiment according to any one of the first to eleventh embodiments, the vent member may have a maximum sealing strength of 6 kgf/15 mm or more at room temperature to 60°C.

In the thirteenth embodiment according to any one of the first to twelfth embodiments, the vent member may have an average sealing strength of 4.5 kgf/15 mm or more at room temperature to 60°C.

In the fourteenth embodiment according to any one of the first to thirteenth embodiments, the linear low-density polyethylene having a comonomer with a carbon number of 6 or more may be polymerized in the presence of a metallocene catalyst.

In the fifteenth embodiment according to any one of the first to fourteenth embodiments, in the linear low-density polyethylene having a comonomer with a carbon number of 6 or more, a content of the comonomer with a carbon number of 6 or more may be 15 weight% or less, based on 100 weight% of the linear low-density polyethylene having a comonomer with a carbon number of 6 or more.

In the sixteenth embodiment according to any one of the first to fifteenth embodiments, the linear low-density polyethylene having a comonomer with a carbon number of 6 or more may have a poly dispersity index (PDI) of 4 or less.

In the seventeenth embodiment according to any one of the first to sixteenth embodiments, a difference between a crystallization temperature of the sealant resin and a crystallization temperature of the linear low-density polyethylene having a comonomer with a carbon number of 6 or more may be 10°C or less.

In the eighteenth embodiment according to the seventeenth embodiment, the linear low-density polyethylene having a comonomer with a carbon number of 6 or more may have a crystallization temperature of 90°C to 115°C.

In the nineteenth embodiment according to any one of the first to eighteenth embodiments, the linear low-density polyethylene having a comonomer with a carbon number of 6 or more may have a lower melting point of 100°C to 130°C.

In the twentieth embodiment according to any one of the first to nineteeth embodiments, the linear low-density polyethylene having a comonomer with a carbon number of 6 or more may have a weight-average molecular weight of 100,000 g/mol to 400,000 g/mol.

In the twenty first embodiment according to any one of the first to twentieth embodiments, the secondary battery may be a pouch-type secondary battery.

In the twenty second embodiment according to any one of the first to twenty first embodiments, the vent member may have a maximum sealing strength of less than 6 kgf/15 mm at 100°C to 120°C.

In the twenty third embodiment according to any one of the first to twenty second embodiments, the vent member may have an average sealing strength of less than 4.5 kgf/15 mm at 100°C to 120°C.

In the twenty fourth embodiment according to any one of the first to twenty third embodiments, a content of the comonomer with a carbon number of 6 or more may be 5 weight% to 15 weight%, based on 100 weight% of the linear low-density polyethylene.

In the twenty fifth embodiment according to any one of the first to twenty fourth embodiments, the linear low-density polyethylene may have a poly dispersity index (PDI) of 1 to 4.

In the twenty sixth embodiment according to any one of the first to twenty fifth embodiments, the vent member may have a maximum sealing strength of less than 3 kgf/15 mm at 120°C or above.

In the twenty seventh embodiment according to any one of the first to twenty sixth embodiments, the vent member may have an average sealing strength of less than 2 kgf/15 mm at 120°C or above.

### Advantageous Effects

In the secondary battery according to an embodiment of the present disclosure, by forming the sealing portion to have a narrow width in the vent inducing region, gas may be induced to be discharged more easily toward the vent inducing region. Accordingly, the safety of the battery may be improved.

In the secondary battery according to an embodiment of the present disclosure, since a vent member containing a linear low-density polyethylene having a comonomer with a carbon number of 6 or more is provided in the vent inducing region, it is possible to induce gas to be discharged to the vent inducing region. Accordingly, the safety of the battery is improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view of a secondary battery according to an embodiment of the present disclosure.
FIG. 2 is an enlarged view showing a portion A of FIG. 1.
FIG. 3 is a plan view of a secondary battery according to another embodiment of the present disclosure.
FIG. 4 is an enlarged view showing a vent inducing region in a secondary battery according to still another embodiment of the present disclosure.
FIG. 5 is a cross-sectioned view, taken along the axis B-B' of FIG. 4.
FIG. 6 is an enlarged view showing a vent inducing region in a secondary battery according to still another embodiment of the present disclosure.
FIG. 7 is a diagram showing a state in which a vent occurs in the secondary battery according to an embodiment of the present disclosure.

### DETAILED DESCRIPTION

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

A secondary battery according to an embodiment of the present disclosure includes an electrode assembly; an electrode lead attached to the electrode assembly; a case including an accommodation portion for accommodating the electrode assembly and a sealing portion containing a sealant resin and formed to seal the electrode assembly; a lead film formed to surround a part of an outer surface of the electrode lead and interposed between the electrode lead and the case; and a vent member containing a linear low-density polyethylene having a comonomer with a carbon number of 6 or more, wherein the sealing portion has a vent inducing region including the vent member, and a width of the vent inducing region is smaller than a width of the sealing portion other than the vent inducing region.

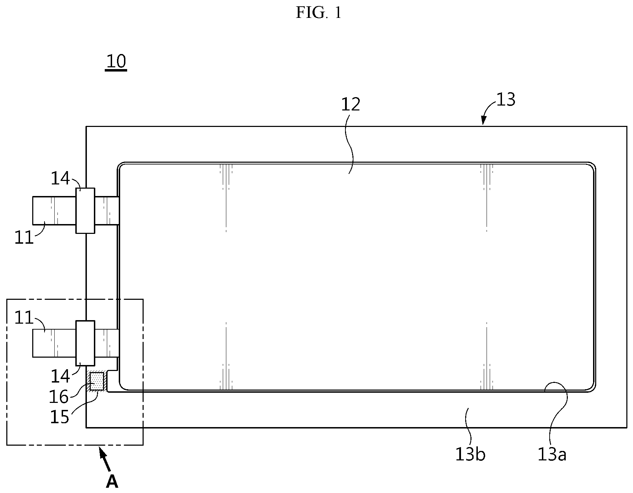

FIG. 1 is a plan view of a secondary battery according to an embodiment of the present disclosure.

Referring to FIG. 1, the secondary battery 10 includes an electrode assembly 12 to which an electrode lead 11 is attached, and a case 13.

The electrode assembly 12 includes a positive electrode plate, a negative electrode plate and a separator. In the electrode assembly 12, a positive electrode plate and a negative electrode plate may be sequentially laminated with a separator being interposed therebetween.

The positive electrode plate may include a positive electrode current collector made of a metal thin film having excellent conductivity - for example, an aluminum (Al) foil, and a positive electrode active material layer coated on at least one surface thereof. In addition, the positive electrode plate may include a positive electrode tab made of a metal material - for example, an aluminum (Al) material, at one side end thereof. The positive electrode tab may protrude from one side end of the positive electrode plate. The positive electrode tab may be welded to one side end of the positive electrode plate, or be bonded thereto using a conductive adhesive.

The negative electrode plate may include a negative electrode current collector made of a conductive metal thin film - for example, a copper (Cu) foil, and a negative electrode active material layer coated on at least one surface thereof. In addition, the negative electrode plate may include a negative electrode tab formed of a metal material - for example, a nickel (Ni) material, at one side end thereof. The negative electrode tab may protrude from one side end of the negative electrode plate. The negative electrode tab may be welded to one side end of the negative electrode plate, or be bonded thereto using a conductive adhesive.

The separator is interposed between the positive electrode plate and the negative electrode plate to electrically insulate the positive electrode plate and the negative electrode plate from each other. The separator may be a porous membrane so that lithium ions can pass between the positive electrode plate and the negative electrode plate. The separator may include, for example, a porous membrane using polyethylene (PE), or polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 may be a jelly-roll (winding-type) electrode assembly having a structure in which long sheet-type positive and negative electrodes are wound with a separator being interposed therebetween, a stacked (stack-type) electrode assembly having a structure in which a plurality of positive and negative electrodes cut into units of a predetermined size are sequentially stacked with a separator being interposed therebetween, a stack/folding type electrode assembly having a structure in which bi-cells or full-cells where positive and negative electrodes of a predetermined unit are stacked with a separator being interposed therebetween are wound, or the like.

The case 13 includes an accommodation portion 13a for accommodating the electrode assembly 12, and a sealing portion 13b formed to seal the electrode assembly 12 as shown in FIG. 1.

The sealing portion 13b may include a sealant resin, and the sealant resin may be fused along an outer circumference of the accommodation portion 13a to seal the electrode assembly 12.

In an embodiment of the present disclosure, the case 13 may be provided in a film form having a multilayer structure including an outer layer for protection against external impacts, a metal barrier layer for blocking moisture, and a sealant layer for sealing the case.

The outer layer may include a polyester-based film using polyethylene terephthalate (PET), polybutylene terephthalate, polyethylene naphthalate, polybutylene naphthalate, co-polyester, polycarbonate, nylon, or the like, and may be configured in a single layer or multiple layers.

The metal barrier layer may include aluminum, copper, or the like.

The sealant layer may include a sealant resin and may be formed in a single layer or multiple layers.

The sealant resin may include polypropylene (PP), acid-modified polypropylene (PPa), random polypropylene, ethylene propylene copolymer, or two or more thereof. The ethylene propylene copolymer may include, but is not limited to, ethylene-propylene rubber, ethylene-propylene block copolymer, and the like.

In an embodiment of the present disclosure, the case 13 may be in a pouch form.

The pouch-type case 13 may include an upper pouch and a lower pouch. When the case 13 includes an upper pouch and a lower pouch, after the upper pouch and the lower pouch are positioned so that the sealant resins thereof face each other, the facing sealant resins may be configured to be fused with each other by heat and pressure to seal the battery.

The fusion of the sealing portion 13b may be thermal fusion, ultrasonic fusion, or the like, but is not particularly limited as long as the sealing portion 13b can be fused.

The sealing portion 13b may be sealed on four or three peripheral sides of the battery case 13 in some embodiments. In the three-sided sealing structure, after the upper pouch and the lower pouch are formed on one pouch sheet, the boundary surface between the upper pouch and the lower pouch is bent so that the electrode assembly accommodation portions 13a formed on the upper pouch and the lower pouch overlap, and in this state, the edges of the remaining three sides are sealed except for the bending portion.

The electrode lead 11 may be accommodated in the case 13 so that a part thereof is exposed to the outside of the battery case 13 as shown in FIG. 1.

The secondary battery 10 according to an embodiment of the present disclosure includes a lead film 14.

The lead film 14 surrounds a part of the outer surface of the electrode lead 11 and is interposed between the electrode lead 11 and the case 13. For example, the lead film 14 may be interposed between the electrode lead 11 and the sealing portion 13b of the case 13 in a region where the electrode lead 11 protrudes or extends away from the case 13 to help binding of the electrode lead 11 and the case 13.

Referring to FIG. 1, the sealing portion 13b includes a vent inducing region 15, and the width of the vent inducing region 15 is smaller than the width of the sealing portion 13b other than the vent inducing region.

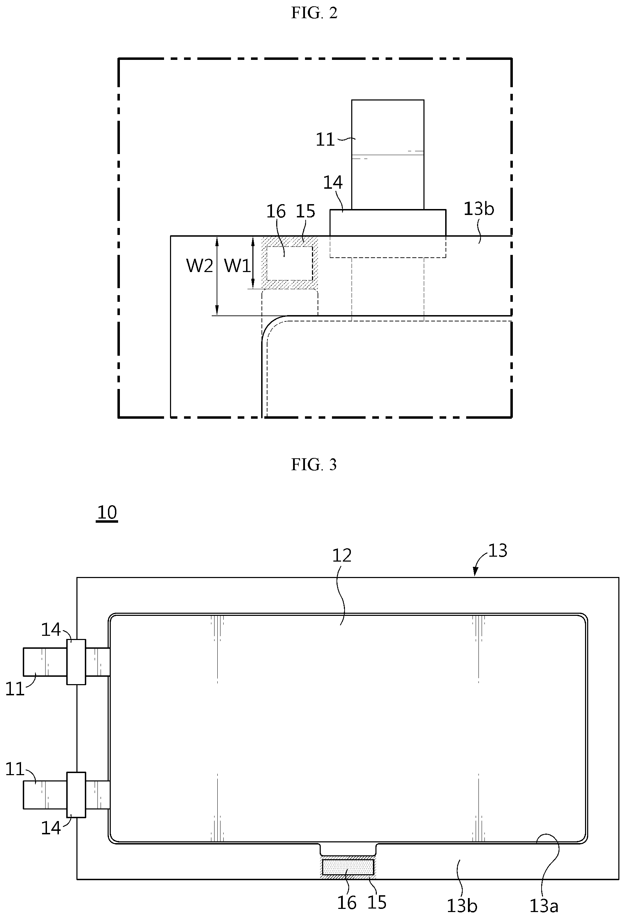

FIG. 2 is an enlarged view showing a portion A of FIG. 1.

Referring to FIG. 2, the width W1 of the vent inducing region 15 is smaller than the width W2 of the sealing portion 13b other than the vent inducing region 15. The sealing area of the vent inducing region 15 is smaller than the sealing area of the sealing portion 13b other than the vent inducing region, and thus the sealing property of the vent inducing region 15 is relatively weak. Therefore, if gas is generated, pressure is applied to the sealing portion 13b, and if the pressure is applied to the sealing portion 13b, the gas may be discharged as the sealing is released at the vent inducing region 15, which has a relatively weak sealing property in the sealing portion 13b.

In an embodiment of the present disclosure, the vent inducing region 15 may be formed in a recessed form from the outside to the inside of the case 13.

In another embodiment of the present disclosure, the vent inducing region 15 may be formed in a recessed form from the inside to the outside of the case 13. If the vent inducing region 15 is formed in a recessed form from the inside to the outside of the case 13, when pressure is applied to the sealing portion 13b since gas is generated, the pressure is concentrated on the inner side of the vent inducing region 15 close to the accommodation portion 13a, and thus the sealing may be more easily released in the vent inducing region 15, which has a relatively weak sealing.

The vent inducing region 15 may be formed at various locations.

Referring to FIG. 1, the vent inducing region 15 may be formed in the sealing portion beside the electrode leads 11 except for a region between the electrode leads 11. The vent inducing region 15 may be located in the sealing portion at a corner of the case. For example, the vent inducing region 15 may be located at the corner of the sealing portion where the electrode lead 11 is exposed to the outside. If the vent inducing region 15 is located at the aforementioned position, the amount of gas discharged toward the electrode lead 11 may be minimized, thereby further improving the safety of the battery.

FIG. 3 is a plan view of a secondary battery according to another embodiment of the present disclosure.

Referring to FIG. 3, the vent inducing region 15 may be located in the sealing portion other than the sealing portion where the electrode lead 11 is exposed to the outside.

In an embodiment of the present disclosure, after the sealing portion 13b is formed so that the vent inducing region 15 has a certain width, the sealing portion may be cut in the vent inducing region 15 so that the vent inducing region 15 has a relatively narrow width. In this case, the vent inducing region 15 is formed to be recessed from the outside to the inside of the case 13.

In still another embodiment of the present disclosure, a heating means (a heating block or a heating jig) may be formed in a shape corresponding to the vent inducing region 15 to seal the sealing portion, so that the width of the vent inducing region 15 is formed to be smaller than the width of the sealing portion 13b other than the vent inducing region 15. In this case, the vent inducing region 15 may be formed to be recessed from the inside of the case 13 to the outside.

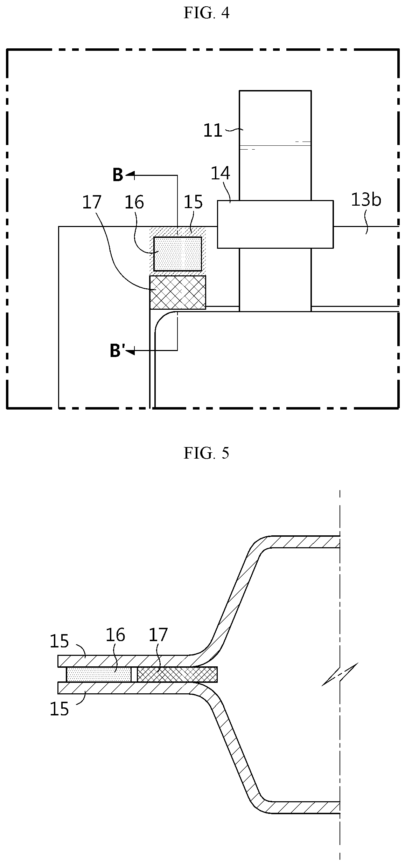

FIG. 4 is an enlarged view showing a vent inducing region 15 in a secondary battery according to still another embodiment of the present disclosure.

Referring to FIG. 4, a tape 17 may be inserted so that the width W1 of the vent inducing region 15 is smaller than the width W2 of the sealing portion 13b other than the vent inducing region.

The tape 17 may include a material having more excellent heat resistance than the sealing portion 13b. Accordingly, the portion into which the tape 17 is inserted is not sealed, and only portions other than the portion into which the tape 17 is inserted is sealed with each other to form the sealing portion 13b. For example, the tape 17 may include polyimide, polyethylene terephthalate (PET), or a mixture thereof.

FIG. 5 is a cross-sectioned view, taken along the axis B-B' of FIG. 4.

Referring to FIG. 5, the tape 17 may be inserted between the sealant layers that seal the case in the vent inducing region 15, so that the width W1 of the vent inducing region 15 is smaller than the width W2 of the sealing portion 13b other than the vent inducing region.

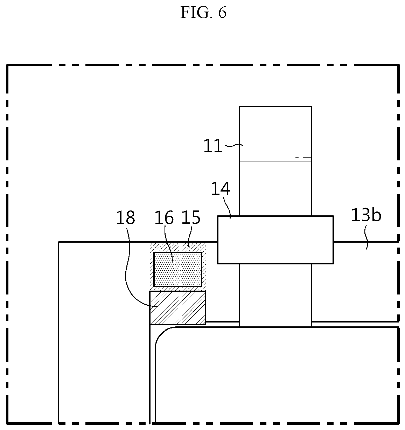

FIG. 6 is an enlarged view showing a vent inducing region 15 in a secondary battery according to still another embodiment of the present disclosure.

Referring to FIG. 6, a resin 18 may be inserted so that the width W1 of the vent inducing region 15 is smaller than the width W2 of the sealing portion 13b other than the vent inducing region. The configuration in which the resin 18 is inserted refers to the contents of FIG. 5.

The resin 18 must be a material that does not adhere to the sealant layer. Since the resin 18 does not adhere to the sealant layer, the portion where the resin 18 is inserted may not be sealed, and only the sealant layers other than the portion where the resin 18 is inserted may be sealed with each other to form the sealing portion 13b.

In an embodiment of the present disclosure, the resin 18 may include a fluorine-based resin, a silicone resin, or a mixture thereof.

The fluorine-based resin may be a resin having a chemical formula of CHₓCF_{y} (x+y=4, x=0. 1. 2. 3. 4). For example, the fluorine-based resin may include polytetrafluoroethylene (PTFE).

The silicone resin may include, for example, polydimethylsiloxane.

In an embodiment of the present disclosure, the width W1 of the vent inducing region 15 may be 40% to 80%, or 40% to 60% of the width W2 of the sealing portion other than the vent inducing region. When the width W1 of the vent inducing region 15 satisfies the aforementioned range, when gas is generated, sealing may be more easily released at the vent inducing region 15, which has a relatively weak sealing property.

Referring to FIG. 1, the vent inducing region 15 includes a vent member 16. When a thermal runaway phenomenon occurs, the vent member 16 induces gas to be discharged in a specific direction, thereby improving the safety of the battery. In particular, as the vent member 16 is included in the vent inducing region 15 having a relatively weak sealing property, the gas may be more easily induced to be discharged to the vent inducing region 15.

The vent member 16 may be attached to the case 13 by thermal fusion. In another example, the vent member 16 may be attached to the case 13 by an adhesive such as glue. In another example, the vent member 16 and the case 13 may be physically coupled to each other by means of a clip or the like. In another example, at least a part of the vent member 16 may be embedded in a film constituting the case 13, for example a sealant resin.

The vent member 16 contains a linear low-density polyethylene having a comonomer with a carbon number of 6 or more. As the vent member 16 contains the linear low-density polyethylene having a comonomer with a carbon number of 6 or more, the sealing property of the case 13 is excellent in the normal temperature range, for example at room temperature to 60°C, and at a high temperature, for example as at 100°C or above, the vent sealing strength of the case in which the vent member 16 is inserted may be lowered, which may realize or cause venting.

In an embodiment of the present disclosure, the vent member 16 may contain a linear low-density polyethylene having a comonomer with a carbon number of 6 to 8.

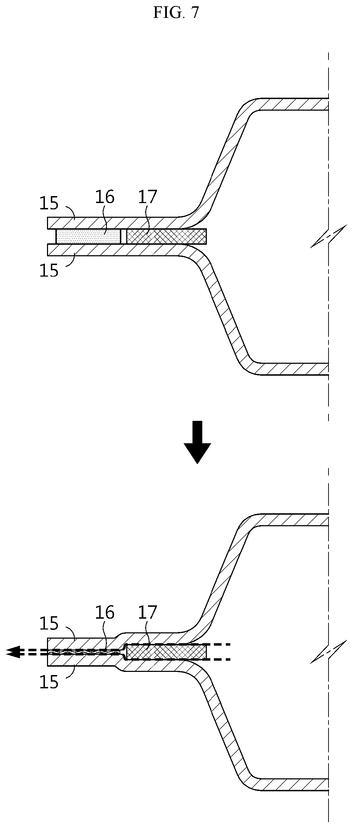

FIG. 7 is a diagram showing a state in which a vent occurs in the secondary battery according to an embodiment of the present disclosure. Specifically, FIG. 7 is a cross-sectional view showing the vent member in the secondary battery according to an embodiment of the present invention.

Referring to FIG. 3, at a temperature at which the battery normally operates, the vent member serves to seal the case from the outside. If the temperature of the battery rises excessively due to abnormal operation of the battery, the vent member melts and the sealing strength of the part of the vent member in which the vent member is inserted decreases. Therefore, gas may be discharged into this part. For example, as the pressure of the gas inside the battery is applied to the interface between the vent member and the vent inducing region, a gap is formed between the vent member and the vent inducing region, and the gas may be discharged thereto.

In an embodiment of the present disclosure, the linear low-density polyethylene having a comonomer with a carbon number of 6 or more may have a lower melting point than the sealant resin. If the linear low-density polyethylene having a comonomer with a carbon number of 6 or more has a lower melting point than the sealant resin, the linear low-density polyethylene may melt faster than the sealant resin at a high temperatures. As the sealing strength of the part in which the vent member 16 is inserted is lower than the sealing strength of the case containing a sealant resin, the vent characteristics may be more easily implemented.

In an embodiment of the present disclosure, the linear low-density polyethylene having a comonomer with a carbon number of 6 or more may have a melting point of 100°C to 130°C, or 105°C to 125°C, or 110°C to 120°C. If the linear low-density polyethylene having a comonomer with a carbon number of 6 or more satisfies the above-mentioned range, the sealing strength of the vent inducing region 15 in which the vent member 16 is inserted may be lowered at a high temperature, for example 100°C or higher, so that the venting characteristic may be readily implemented.

The melting point of the linear low-density polyethylene having a comonomer with a carbon number of 6 or more may be measured using a differential scanning calorimeter (DSC). For example, the temperature of a sample is increased from 30°C to 280°C at 10°C/min, maintained at 280°C for 10 minutes, cooled to 30°C at 10°C/min, and then maintained at 30°C for 10 minutes. Then, after increasing the temperature of the sample from 30°C to 280°C at 10°C/min, the melting point may be measured by maintaining the temperature at 280°C for 10 minutes.

In an embodiment of the present disclosure, the vent member 16 may be vented at 100°C to 120°C to expel or exhaust gases from the accommodation portion to outside the secondary battery. In particular, the vent member 16 may be vented at a pressure of 100°C to 120°C and at a pressure of 1.5 atm or more. As the vent member 16 is vented in the aforementioned temperature range and/or the aforementioned pressure condition, it is possible to induce the gas to be discharged only during abnormal operation of the battery while sealing the battery during normal operation of the battery.

In an embodiment of the present disclosure, the vent member 16 may have a maximum sealing strength of less than 6 kgf/15 mm or less than 5 kgf/15mm or less than 4.5 kgf/15mm at 100°C or higher. In an embodiment of the present disclosure, the vent member 16 may have a maximum sealing strength of less than 6 kgf/15 mm or less than 5 kgf/15mm or less than 4.5 kgf/15mm at 100°C to 120°C. In an embodiment of the present disclosure, the vent member 16 may have a maximum sealing strength of less than 3 kgf/15 mm or less than 2 kgf/15 mm or less than 1 kgf/15 mm or less than 0.5 kgf/15 mm at 120°C or higher. If the vent member 16 satisfies the above-mentioned sealing strength in the above-mentioned temperature range, the sealing strength of the vent inducing region 15 in which the vent member 16 is inserted may be lowered at a high temperature, for example 100°C or higher, so that the vent characteristic may be readily implemented.

In an embodiment of the present disclosure, the vent member 16 may have a maximum sealing strength of 6 kgf/15 mm or more or 8 kgf/15 mm or more or 10 kgf/15 mm or more at room temperature to 60°C. If the vent member 16 satisfies the above-mentioned sealing strength in the above temperature range, even though the vent member 16 is inserted, the vent inducing region 15 in which the vent member 16 is inserted may have excellent sealing strength during normal operation of the battery, which may easily secure the sealing property of the battery.

In an embodiment of the present disclosure, the vent member 16 may have a maximum sealing strength of less than 6 kgf/15 mm at 100°C or higher. The vent member 16 may have a maximum sealing strength of 6 kgf/15 mm or more at room temperature to 60°C. If the vent member 16 satisfies the sealing strength described above, the sealing strength of the vent inducing region 15 in which the vent member 16 is inserted may be lowered at a high temperature, for example at 100°C or higher, so that the vent characteristic may be readily implemented. In addition, since the vent inducing region 15 has excellent sealing strength during normal operation of the battery, the sealing property of the battery may be easily secured.

In an embodiment of the present disclosure, the vent member 16 may have an average sealing strength of less than 4.5 kgf/15 mm or less than 3 kgf/15 mm at 100°C or above. In an embodiment of the present disclosure, the vent member 16 may have an average sealing strength of less than 4.5 kgf/15 mm or less than 3 kgf/15 mm at 100°C to 120°C. In an embodiment of the present disclosure, the vent member 16 may have an average sealing strength of less than 2 kgf/15 mm or less than 1 kgf/15 mm or less than 0.5 kgf/15 mm at 120°C or higher. If the vent member 16 satisfies the above-mentioned sealing strength in the above-mentioned temperature range, the sealing strength of the vent inducing region 15 in which the vent member 16 is inserted may be lowered at a high temperature, for example at 100°C or higher, so that the vent characteristic may be implemented more easily.

In an embodiment of the present disclosure, the vent member 16 may have an average sealing strength of 4.5 kgf/15 mm or more or 5 kgf/15 mm or more or 6 kgf/15mm or more or 7 kgf/15 mm or more at room temperature to 60°C. If the vent member 16 satisfies the above-mentioned sealing strength in the above temperature range, even though the vent member 16 is inserted, the vent inducing region 15 in which the vent member 16 is inserted may have excellent sealing strength during normal operation of the battery, which may easily secure the sealing property of the battery.

In an embodiment of the present disclosure, the vent member 16 may have an average sealing strength of less than 4.5 kgf/15 mm at 100°C or above. The vent member 16 may have an average sealing strength of 4.5 kgf/15 mm or more at room temperature to 60°C. If the vent member 16 has the above-mentioned sealing strength in the above-described temperature range, the sealing strength of the vent inducing region 15 in which the vent member 16 is inserted may be lowered at a high temperature, for example at 100°C or higher, so that the vent characteristic may be easily implemented. In addition, since the vent inducing region 15 has excellent sealing strength during normal operation of the battery, the sealing property of the battery may be easily secured.

The sealing strength of the vent member 16 according to temperature may be measured by conducting a tensile test at a speed of 5 mm/min, after cutting the case 13 corresponding to the vent inducing region 15 in which the vent member 16 is inserted into a width of 15 mm and a length of 5 cm and then gripping both ends thereof using a UTM jig in a state where both ends are spread to 180°.

At this time, the maximum sealing strength means a maximum value when the case 13 is broken, and the average sealing strength means an average value when the case 13 is stretched by 8 mm at 4.5 kgf/15 mm when the maximum sealing strength is 4.5 kgf/15 mm or more and an average value when the case 13 is stretched by 8 mm at the maximum sealing strength when the maximum sealing strength is less than 4.5 kgf/15 mm.

In an embodiment of the present disclosure, the linear low-density polyethylene having a comonomer with a carbon number of 6 or more may be polymerized in the presence of a metallocene catalyst. If the linear low-density polyethylene having a comonomer with a carbon number of 6 or more is polymerized in the presence of a metallocene catalyst, it may be more advantageous in terms of sealing strength and properties, compared to the case where it is polymerized in the presence of a Ziegler-Natta catalyst.

In an embodiment of the present disclosure, the content of the comonomer with a carbon number of 6 or more in the linear low-density polyethylene having a comonomer with a carbon number of 6 or more may be 15 weight% or less, or 12 weight% or less, or 11.8 weight% or less, or 10 weight% or less, or 9 weight% or less, or 8 weight% or less, or 7.6 weight% or less, based on 100 weight% of the linear low-density polyethylene having a comonomer with a carbon number of 6 or more. At the same time, it may be 5 weight% or more, or 7.6 weight% or more, or 8 weight % or more, or 9.0 weight% or more, or 10 weight% or more, or 11.8 weight% or more, or 12 weight% or more. If the content of the comonomer with a carbon number of 6 or more satisfies the above-mentioned range, it may be easy to ensure that the sealing strength is not lowered during normal operation of the battery due to a decreased packing density between molecules.

The content of the comonomer with a carbon number of 6 or more may be measured using an H-NMR. For example, after about 10 mg of a sample is completely dissolved in about 0.6 mL of trichloroethylene solvent using a heat gun, it may be sampled in an NMR tube and measured using the ¹H-NMR.

In an embodiment of the present disclosure, the linear low-density polyethylene having a comonomer with a carbon number of 6 or more may have a weight-average molecular weight of 100,000 g/mol to 400,000 g/mol, or 200,000 g/mol to 350,000 g/mol, or 230,000 g/mol to 300,000 g/mol. If the weight-average molecular weight of the linear low-density polyethylene having a comonomer with a carbon number of 6 or more satisfies the above-described range, the sealing strength with the sealant resin may be more excellent during normal operation of the battery.

In an embodiment of the present disclosure, the linear low-density polyethylene having a comonomer with a carbon number of 6 or more may have a poly dispersity index (PDI) of 4 or less, or 3.8 or less, or 3.796 or less, or 3.5 or less, or 3.023 or less, or 3 or less, or 2.7 or less, or 2.674 or less. In addition, the poly dispersity index (PDI) may be 1.0 or more. If the poly dispersity index of the linear low-density polyethylene having a comonomer with a carbon number of 6 or more satisfies the above range, the molecular weight distribution is narrow, so the sealing strength and the properties may be more excellent during normal operation of the battery.

The weight-average molecular weight and the poly dispersity index of the linear low-density polyethylene having a comonomer with a carbon number of 6 or more may be measured by gel permeation chromatography (GPC) under the following conditions:
- column: Tosoh, HLC-8321 GPC/HT
- solvent: TCB (Trichlorobenzene) + 0.04% BHT (after drying with 0.1% CaCl₂)
- flow velocity: 1.0 ml/min
- sample concentration: 1.5 mg/ml
- dose: 300 µl
- column temperature: 160°C
- Detector: RI detector
- Standard: Polystyrene (calibrated with a third-order function)

In an embodiment of the present disclosure, the crystallization temperature of the sealant resin and the crystallization temperature of the linear low-density polyethylene having a comonomer with a carbon number of 6 or more may be similar. For example, the difference between the crystallization temperature of the sealant resin and the crystallization temperature of the linear low-density polyethylene having a comonomer with a carbon number of 6 or more may be 10°C or less, or 5°C or less. In addition, the difference between the crystallization temperature of the sealant resin and the crystallization temperature of the linear low-density polyethylene having a comonomer with a carbon number of 6 or more may be 0.1°C or more. If the difference between the crystallization temperature of the sealant resin and the crystallization temperature of the linear low-density polyethylene having a comonomer with a carbon number of 6 or more satisfies the above range, the sealant resin and the linear low-density polyethylene having a comonomer with a carbon number of 6 or more may have improved fusion characteristic during normal operation of the battery.

In an embodiment of the present disclosure, the linear low-density polyethylene having a comonomer with a carbon number of 6 or more may have a crystallization temperature of 90°C to 115°C, or 95°C to 110°C, or 100°C to 110°C, or 105°C to 110°C. If the crystallization temperature of the linear low-density polyethylene having a comonomer with a carbon number of 6 or more satisfies the above range, the sealant resin and the linear low-density polyethylene having a comonomer with a carbon number of 6 or more may have improved fusion characteristics.

In an embodiment of the present disclosure, the difference between the crystallization temperature of the sealant resin and the crystallization temperature of the linear low-density polyethylene having a comonomer with a carbon number of 6 or more may be 10°C or less, and the crystallization temperature of the linear low-density polyethylene having a comonomer with a carbon number of 6 or more may be 90°C to 115°C.

The crystallization temperature may be measured using a differential scanning calorimeter (DSC). For example, the temperature of the sample is increased from 30°C to 280°C at 10°C/min, maintained at 280°C for 10 minutes, cooled to 30°C at 10°C/min, and then maintained at 30°C for 10 minutes. Then, after increasing the temperature from 30°C to 280°C at 10°C/min, the crystallization temperature may be measured by maintaining the temperature at 280°C for 10 minutes.

In an embodiment of the present disclosure, the vent member 16 may have various shapes so that the gas is easily directed toward the vent region. For example, the vent member 16 may have a film shape.

The vent member 16 may be formed to have a predetermined thickness of a preset magnitude. Moreover, the vent member 16 may be inserted into the vent inducing region 15 so that the insertion length can be varied or the venting pressure and position can be controlled depending on the design. Here, the insertion length of the vent member means a maximum value of the distance between one end and the other end of the vent member based on the protruding direction of the electrode lead.

For example, the insertion length of the vent member 16 may be smaller than the width of the vent inducing region 15. For example, the insertion length of the vent member 16 may be less than about 50% of the width of the vent inducing region 15. Here, the width of the vent inducing region 15 means a maximum value of the distance between one end and the other end of the vent inducing region 15 based on the protruding direction of the electrode lead 11.

Alternatively, the insertion length of the vent member 16 may be greater than the width of the vent inducing region 15. For example, the vent member 16 may be inserted through the accommodation portion 13a to be exposed to the outside of the case 13.

In an embodiment of the present disclosure, the vent member 16 may further include an adhesive layer for smoother placement.

In an embodiment of the present disclosure, the secondary battery may be a cylindrical, prismatic, or pouch-type secondary battery. Among them, the secondary battery may be a pouch-type secondary battery.

## Claims

1. A secondary battery (10), comprising:
an electrode assembly (12);
an electrode lead (11) attached to the electrode assembly (12);
a case (13) including an accommodation portion (13a) for accommodating the electrode assembly (12) and a sealing portion (13b) containing a sealant resin and formed to seal the electrode assembly (12);
a lead film (14) formed to surround a part of an outer surface of the electrode lead (11) and interposed between the electrode lead (11) and the case (13); and
a vent member (16) containing a linear low-density polyethylene having a comonomer with a carbon number of 6 or more,
wherein the sealing portion (13b) has a vent inducing region (15) including the vent member (16), and
a tape (17) or a resin (18) is inserted between the vent member (16) and the accommodation portion (13a) so that a width of the vent inducing region (15) is smaller than a width of the sealing portion (13b) other than the vent inducing region (15).

2. The secondary battery (10) according to claim 1,
wherein the width of the vent inducing region (15) is 40% to 80% of the width of the sealing portion (13b) other than the vent inducing region (15).

3. The secondary battery (10) according to claim 1,
wherein the tape (17) contains polyimide, polyethylene terephthalate (PET), or a mixture thereof.

4. The secondary battery (10) according to claim 3,
wherein the resin (18) contains a fluorine-based resin, a silicone resin, or a mixture thereof.

5. The secondary battery (10) according to claim 1,
wherein the vent inducing region (15) is formed in the sealing portion (13b) beside the electrode leads (11) except for a region between the electrode leads (11).

6. The secondary battery (10) according to claim 1,
wherein the linear low-density polyethylene having a comonomer with a carbon number of 6 or more is a linear low-density polyethylene having a comonomer with a carbon number of 6 to 8.

7. The secondary battery (10) according to claim 1,
wherein the linear low-density polyethylene having a comonomer with a carbon number of 6 or more has a lower melting point than the sealant resin.

8. The secondary battery (10) according to claim 1,
wherein the vent member (16) melts at 100°C to 120°C to vent a gas.

9. The secondary battery (10) according to claim 8,
wherein the vent member (16) is vented at a pressure of 1.5 atm or above.

10. The secondary battery (10) according to claim 1,
wherein the vent member (16) has a maximum sealing strength of less than 6 kgf/15 mm at 100°C or above.

11. The secondary battery (10) according to claim 1,
wherein the vent member (16) has an average sealing strength of less than 4.5 kgf/15 mm at 100°C or above.

12. The secondary battery (10) according to claim 1,
wherein the vent member (16) has a maximum sealing strength of 6 kgf/15 mm or more at room temperature to 60°C.

13. The secondary battery (10) according to claim 1,
wherein the vent member (16) has an average sealing strength of 4.5 kgf/15 mm or more at room temperature to 60°C.

14. The secondary battery (10) according to claim 1,
wherein the linear low-density polyethylene having a comonomer with a carbon number of 6 or more is polymerized in the presence of a metallocene catalyst.

15. The secondary battery (10) according to claim 1,
wherein in the linear low-density polyethylene having a comonomer with a carbon number of 6 or more, a content of the comonomer with a carbon number of 6 or more is 15 weight% or less, based on 100 weight% of the linear low-density polyethylene having a comonomer with a carbon number of 6 or more.

16. The secondary battery (10) according to claim 1,
wherein the linear low-density polyethylene having a comonomer with a carbon number of 6 or more has a poly dispersity index (PDI) of 4 or less.

17. The secondary battery (10) according to claim 1,
wherein a difference between a crystallization temperature of the sealant resin and a crystallization temperature of the linear low-density polyethylene having a comonomer with a carbon number of 6 or more is 10°C or less.

18. The secondary battery (10) according to claim 17,
wherein the linear low-density polyethylene having a comonomer with a carbon number of 6 or more has a crystallization temperature of 90°C to 115°C.

19. The secondary battery (10) according to claim 1,
wherein the linear low-density polyethylene having a comonomer with a carbon number of 6 or more has a lower melting point of 100°C to 130°C.

20. The secondary battery (10) according to claim 1,
wherein the linear low-density polyethylene having a comonomer with a carbon number of 6 or more has a weight-average molecular weight of 100,000 g/mol to 400,000 g/mol.

21. The secondary battery (10) according to claim 1,
wherein the secondary battery (10) is a pouch-type secondary battery.

22. The secondary battery (10) according to claim 1,
wherein the vent member (16) has a maximum sealing strength of less than 6 kgf/15 mm at 100°C to 120°C.

23. The secondary battery (10) according to claim 1,
wherein the vent member (16) has an average sealing strength of less than 4.5 kgf/15 mm at 100°C to 120°C.

24. The secondary battery (10) according to claim 1,
wherein a content of the comonomer with a carbon number of 6 or more is 5 weight% to 15 weight%, based on 100 weight% of the linear low-density polyethylene.

25. The secondary battery (10) according to claim 1,
wherein the linear low-density polyethylene has a poly dispersity index (PDI) of 1 to 4.

26. The secondary battery (10) according to claim 1,
wherein the vent member (16) has a maximum sealing strength of less than 3 kgf/15 mm at 120°C or above.

27. The secondary battery (10) according to claim 1,
wherein the vent member (16) has an average sealing strength of less than 2 kgf/15 mm at 120°C or above.

## Patentansprüche

1. Sekundärbatterie (10), umfassend:
eine Elektrodenanordnung (12);
eine Elektrodenleitung (11), welche an der Elektrodenanordnung (12) befestigt ist;
ein Gehäuse (13), welches einen Aufnahmeabschnitt (13a) zur Aufnahme der Elektrodenanordnung (12) und einem Dichtungsabschnitt (13b) umfasst, welcher ein Dichtungsharz enthält und zum Abdichten der Elektrodenanordnung (12) gebildet ist;
eine Tabfolie (14), welche gebildet ist, um einen Teil einer Außenfläche der Elektrodenleitung (11) zu umgeben und welche zwischen der Elektrodenleitung (11) und dem Gehäuse (13) eingefügt ist; und
ein Entlüftungselement (16), welches ein lineares Polyethylen niedriger Dichte enthält, welches einen Comonomer mit einer Kohlenstoffzahl von 6 oder mehr aufweist,
wobei der Dichtungsabschnitt (13b) einen Entlüftungseinleitungsbereich (15) aufweist, welcher das Entlüftungselement (16) umfasst, und
ein Klebeband (17) oder ein Harz (18) zwischen dem Entlüftungselement (16) und dem Aufnahmeabschnitt (13a) derart eingesetzt ist, dass eine Breite des Entlüftungseinleitungsbereichs (15) kleiner ist als eine Breite des Dichtungsabschnitts (13b) außer dem Entlüftungseinleitungsbereich (15).

2. Sekundärbatterie (10) nach Anspruch 1,
wobei die Breite des Entlüftungseinleitungsbereichs (15) 40 % bis 80 % der Breite des Dichtungsabschnitts (13b) außer dem Entlüftungseinleitungsbereich (15) beträgt.

3. Sekundärbatterie (10) nach Anspruch 1,
wobei das Klebeband (17) Polyimid, Polyethylenterephthalat (PET) oder eine Mischung davon enthält.

4. Sekundärbatterie (10) nach Anspruch 3,
wobei das Harz (18) ein fluorbasiertes Harz, ein Silikonharz oder eine Mischung davon enthält.

5. Sekundärbatterie (10) nach Anspruch 1,
wobei der Entlüftungseinleitungsbereich (15) in dem Dichtungsabschnitt (13b) neben den Elektrodenleitungen (11) gebildet ist, ausgenommen eines Bereichs zwischen den Elektrodenleitungen (11).

6. Sekundärbatterie (10) nach Anspruch 1,
wobei das lineare Polyethylen niedriger Dichte, welches einen Comonomer mit einer Kohlenstoffzahl von 6 oder mehr aufweist, ein lineares Polyethylen niedriger Dichte, welches einen Comonomer mit einer Kohlenstoffzahl von 6 bis 8 aufweist, ist.

7. Sekundärbatterie (10) nach Anspruch 1,
wobei das lineare Polyethylen niedriger Dichte, welches einen Comonomer mit einer Kohlenstoffzahl von 6 oder mehr aufweist, einen niedrigeren Schmelzpunkt als das Dichtungsharz aufweist.

8. Sekundärbatterie (10) nach Anspruch 1,
wobei das Entlüftungselement (16) bei 100 °C bis 120 °C schmilzt, um ein Gas zu entlüften.

9. Sekundärbatterie (10) nach Anspruch 8,
wobei das Entlüftungselement (16) bei einem Druck von 1,5 atm oder mehr entlüftet ist.

10. Sekundärbatterie (10) nach Anspruch 1,
wobei das Entlüftungselement (16) eine maximale Dichtungsstärke von weniger als 6 kgf/15 mm bei 100 °C oder mehr aufweist.

11. Sekundärbatterie (10) nach Anspruch 1,
wobei das Entlüftungselement (16) eine durchschnittliche Dichtungsstärke von weniger als 4,5 kgf/15 mm bei 100 °C oder mehr aufweist.

12. Sekundärbatterie (10) nach Anspruch 1,
wobei das Entlüftungselement (16) eine maximale Dichtungsstärke von 6 kgf/15 mm oder mehr bei Raumtemperatur bis 60 °C aufweist.

13. Sekundärbatterie (10) nach Anspruch 1,
wobei das Entlüftungselement (16) eine durchschnittliche Dichtungsstärke von 4,5 kgf/15 mm oder mehr bei Raumtemperatur bis 60 °C aufweist.

14. Sekundärbatterie (10) nach Anspruch 1,
wobei das lineare Polyethylen niedriger Dichte, welches einen Comonomer mit einer Kohlenstoffzahl von 6 oder mehr aufweist, in der Gegenwart eines Metallocen-Katalysators polymerisiert ist.

15. Sekundärbatterie (10) nach Anspruch 1,
wobei in dem linearen Polyethylen niedriger Dichte, welches einen Comonomer mit einer Kohlenstoffzahl von 6 oder mehr aufweist, ein Gehalt des Comonomers mit einer Kohlenstoffzahl von 6 oder mehr 15 Gew.-% oder weniger beträgt, basierend auf 100 Gew.-% des linearen Polyethylens niedriger Dichte, welches einen Comonomer mit einer Kohlenstoffzahl von 6 oder mehr aufweist.

16. Sekundärbatterie (10) nach Anspruch 1,
wobei das lineare Polyethylen niedriger Dichte, welches einen Comonomer mit einer Kohlenstoffzahl von 6 oder mehr aufweist, einen Polydispersitätsindex (PDI) von 4 oder weniger aufweist.

17. Sekundärbatterie (10) nach Anspruch 1,
wobei eine Differenz zwischen einer Kristallisationstemperatur des Dichtungsharzes und einer Kristallisationstemperatur des linearen Polyethylens niedriger Dichte, welches einen Comonomer mit einer Kohlenstoffzahl von 6 oder mehr aufweist, 10 °C oder weniger beträgt.

18. Sekundärbatterie (10) nach Anspruch 17,
wobei das lineare Polyethylen niedriger Dichte, welches einen Comonomer mit einer Kohlenstoffzahl von 6 oder mehr aufweist, eine Kristallisationstemperatur von 90 °C bis 115 °C aufweist.

19. Sekundärbatterie (10) nach Anspruch 1,
wobei das lineare Polyethylen niedriger Dichte, welches einen Comonomer mit einer Kohlenstoffzahl von 6 oder mehr aufweist, einen niedrigeren Schmelzpunkt von 100 °C bis 130 °C aufweist.

20. Sekundärbatterie (10) nach Anspruch 1,
wobei das lineare Polyethylen niedriger Dichte, welches einen Comonomer mit einer Kohlenstoffzahl von 6 oder mehr aufweist, ein gewichtsmittleres Molekulargewicht von 100.000 g/mol bis 400.000 g/mol aufweist.

21. Sekundärbatterie (10) nach Anspruch 1,
wobei die Sekundärbatterie (10) eine beutelartige Sekundärbatterie ist.

22. Sekundärbatterie (10) nach Anspruch 1,
wobei das Entlüftungselement (16) eine maximale Dichtungsstärke von weniger als 6 kgf/15 mm bei 100 °C bis 120 °C aufweist.

23. Sekundärbatterie (10) nach Anspruch 1,
wobei das Entlüftungselement (16) eine durchschnittliche Dichtungsstärke von weniger als 4,5 kgf/15 mm bei 100 °C bis 120 °C aufweist.

24. Sekundärbatterie (10) nach Anspruch 1,
wobei ein Gehalt des Comonomers mit einer Kohlenstoffzahl von 6 oder mehr 5 Gew.-% bis 15 Gew.-% beträgt, basierend auf 100 Gew.-% des linearen Polyethylens niedriger Dichte.

25. Sekundärbatterie (10) nach Anspruch 1,
wobei das lineare Polyethylen niedriger Dichte einen Polydispersitätsindex (PDI) von 1 bis 4 aufweist.

26. Sekundärbatterie (10) nach Anspruch 1,
wobei das Entlüftungselement (16) eine maximale Dichtungsstärke von weniger als 3 kgf/15 mm bei 120 °C oder mehr aufweist.

27. Sekundärbatterie (10) nach Anspruch 1,
wobei das Entlüftungselement (16) eine durchschnittliche Dichtungsstärke von weniger als 2 kgf/15 mm bei 120 °C oder mehr aufweist.

## Revendications

1. Batterie secondaire (10), comprenant :
un ensemble d'électrodes (12) ;
un conducteur d'électrode (11) fixé à l'ensemble d'électrodes (12) ;
un boîtier (13) comportant une partie de logement (13a) pour loger l'ensemble d'électrodes (12) et une partie d'étanchéité (13b) contenant une résine d'étanchéité et formée pour rendre étanche l'ensemble d'électrodes (12) ;
un film de conducteur (14) formé pour envelopper une partie d'une surface externe du conducteur d'électrode (11) et interposé entre le conducteur d'électrode (11) et le boîtier (13) ; et
un organe d'évacuation (16) contenant un polyéthylène linéaire à basse densité ayant un comonomère doté un nombre de carbones de 6 ou plus,
dans laquelle la partie d'étanchéité (13b) possède une région d'induction d'évacuation (15) comportant l'organe d'évacuation (16), et
une bande (17) ou une résine (18) est insérée entre l'organe d'évacuation (16) et la partie de logement (13a) de sorte qu'une largeur de la région d'induction d'évacuation (15) soit plus petite qu'une largeur de la partie d'étanchéité (13b) autre que la région d'induction d'évacuation (15).

2. Batterie secondaire (10) selon la revendication 1,
dans laquelle la largeur de la région d'induction d'évacuation (15) représente 40 % à 80 % de la largeur de la partie d'étanchéité (13b) autre que la région d'induction d'évacuation (15).

3. Batterie secondaire (10) selon la revendication 1,
dans laquelle la bande (17) contient du polyimide, du poly(téréphtalate d'éthylène) (PET), ou un mélange de ceux-ci.

4. Batterie secondaire (10) selon la revendication 3,
dans laquelle la résine (18) contient une résine à base de fluor, une résine silicone, ou un mélange de celles-ci.

5. Batterie secondaire (10) selon la revendication 1,
dans laquelle la région d'induction d'évacuation (15) est formée dans la partie d'étanchéité (13b) à côté des conducteurs d'électrode (11) à l'exception d'une région entre les conducteurs d'électrode (11).

6. Batterie secondaire (10) selon la revendication 1,
dans laquelle le polyéthylène linéaire à basse densité ayant un comonomère doté d'un nombre de carbones de 6 ou plus est un polyéthylène linéaire à basse densité ayant un comonomère doté d'un nombre de carbones de 6 à 8.

7. Batterie secondaire (10) selon la revendication 1,
dans laquelle le polyéthylène linéaire à basse densité ayant un comonomère doté d'un nombre de carbones de 6 ou plus possède un plus bas point de fusion que la résine d'étanchéité.

8. Batterie secondaire (10) selon la revendication 1,
dans laquelle l'organe d'évacuation (16) fond à une température de 100 °C à 120 °C pour évacuer un gaz.

9. Batterie secondaire (10) selon la revendication 8,
dans laquelle l'organe d'évacuation (16) est évacué à une pression de 1,5 atm ou plus.

10. Batterie secondaire (10) selon la revendication 1,
dans laquelle l'organe d'évacuation (16) possède une force d'étanchéité maximale de moins de 6 kgf/15 mm à 100 °C ou plus.

11. Batterie secondaire (10) selon la revendication 1,
dans laquelle l'organe d'évacuation (16) possède une force d'étanchéité moyenne de moins de 4,5 kgf/15 mm à 100 °C ou plus.

12. Batterie secondaire (10) selon la revendication 1,
dans laquelle l'organe d'évacuation (16) possède une force d'étanchéité maximale de 6 kgf/15 mm ou plus à température ambiante jusqu'à 60 °C.

13. Batterie secondaire (10) selon la revendication 1,
dans laquelle l'organe d'évacuation (16) possède une force d'étanchéité moyenne de 4,5 kgf/15 mm ou plus à température ambiante jusqu'à 60 °C.

14. Batterie secondaire (10) selon la revendication 1,
dans laquelle le polyéthylène linéaire à basse densité ayant un comonomère doté d'un nombre de carbones de 6 ou plus est polymérisé en présence d'un catalyseur métallocène.

15. Batterie secondaire (10) selon la revendication 1,
dans laquelle, dans le polyéthylène linéaire à basse densité ayant un comonomère doté d'un nombre de carbones de 6 ou plus, une teneur du comonomère doté d'un nombre de carbones de 6 ou plus est de 15 % en poids ou moins, sur la base de 100 % en poids du polyéthylène linéaire à basse densité ayant un comonomère doté d'un nombre de carbones de 6 ou plus.

16. Batterie secondaire (10) selon la revendication 1,
dans laquelle le polyéthylène linéaire à basse densité ayant un comonomère doté d'un nombre de carbones de 6 ou plus possède un indice de polydispersité (PDI) de 4 ou moins.

17. Batterie secondaire (10) selon la revendication 1,
dans laquelle une différence entre une température de cristallisation de la résine d'étanchéité et une température de cristallisation du polyéthylène linéaire à basse densité ayant un comonomère doté d'un nombre de carbones de 6 ou plus est de 10 °C ou moins.

18. Batterie secondaire (10) selon la revendication 17,
dans laquelle le polyéthylène linéaire à basse densité ayant un comonomère doté d'un nombre de carbones de 6 ou plus possède une température de cristallisation de 90 °C à 115 °C.

19. Batterie secondaire (10) selon la revendication 1,
dans laquelle le polyéthylène linéaire à basse densité ayant un comonomère doté d'un nombre de carbones de 6 ou plus possède un plus bas point de fusion de 100 °C à 130 °C.

20. Batterie secondaire (10) selon la revendication 1,
dans laquelle le polyéthylène linéaire à basse densité ayant un comonomère doté d'un nombre de carbones de 6 ou plus possède un poids moléculaire moyen en poids de 100 000 g/mol à 400 000 g/mol.

21. Batterie secondaire (10) selon la revendication 1,
dans laquelle la batterie secondaire (10) est une batterie secondaire de type poche.

22. Batterie secondaire (10) selon la revendication 1,
dans laquelle l'organe d'évacuation (16) possède une force d'étanchéité maximale de moins de 6 kgf/15 mm à une température de 100 °C à 120 °C.

23. Batterie secondaire (10) selon la revendication 1,
dans laquelle l'organe d'évacuation (16) possède une force d'étanchéité moyenne de moins de 4.5 kgf/15 mm à une température de 100 °C à 120 °C.

24. Batterie secondaire (10) selon la revendication 1,
dans laquelle une teneur du comonomère doté d'un nombre de carbones de 6 ou plus est de 5 % en poids à 15 % en poids, sur la base de 100 % en poids du polyéthylène linéaire à basse densité.

25. Batterie secondaire (10) selon la revendication 1,
dans laquelle le polyéthylène linéaire à basse densité possède un indice de polydispersité (PDI) de 1 à 4.

26. Batterie secondaire (10) selon la revendication 1,
dans laquelle l'organe d'évacuation (16) possède une force d'étanchéité maximale de moins de 3 kgf/15 mm à 120 °C ou plus.

27. Batterie secondaire (10) selon la revendication 1,
dans laquelle l'organe d'évacuation (16) possède une force d'étanchéité moyenne de moins de 2 kgf/15 mm à 120 °C ou plus.
